# EUROPÄISCHE PATENTSCHRIFT

(11) **EP 3 525 981 B1**
(45) Veröffentlichungstag und Bekanntmachung des Hinweises auf die Patenterteilung: **27.10.2021**
(21) Anmeldenummer: 17765442.3
(22) Anmeldetag: 13.09.2017
(51) Int. Cl.: B23Q 7/04

(54) **WERKSTÜCKADAPTER ZUR VERWENDUNG IN EINER WERKZEUGMASCHINE SOWIE WERKSTÜCKSPANNSYSTEM**
WORKPIECE ADAPTER FOR USE IN A MACHINE TOOL AND WORKPIECE CLAMPING SYSTEM
ADAPTATEUR DE PIÈCE PRÉVU POUR ÊTRE UTILISÉ DANS UNE MACHINE-OUTIL ET SYSTÈME DE SERRAGE DE PIÈCE

(30) Priorität: 24.04.2017 DE 102017108666
(43) Veröffentlichungstag der Anmeldung: 21.08.2019
(73) Patentinhaber: Ezu-Metallwaren GmbH & Co. KG, 78598 Königsheim (DE)
(72) Erfinder: ZUMKELLER, Andreas, 78647 Trossingen (DE)
(74) Vertreter: Kuhnen & Wacker Patent- und Rechtsanwaltsbüro PartG mbB
(86) Internationale Anmeldenummer: PCT/EP2017/073028
(87) Internationale Veröffentlichungsnummer: WO 2018/197022

(56) Entgegenhaltungen:
- EP-A1- 2 210 702
- WO-A1-01/58641
- DE-A1-102008 023 813

## Beschreibung

### Gebiet der Erfindung

Die Erfindung betrifft einen Werkstückadapter zur Verwendung in einer Werkzeugmaschine sowie ein Werkstückspannsystem.

Maßgeblich für die Wirtschaftlichkeit eines Bearbeitungsprozesses ist die für die Fertigung bzw. Bearbeitung von Bauteilen benötigte Zeit. Dabei schlägt sich nicht nur die Arbeitszeit in Personalkosten nieder, auch Opportunitätskosten, eine Werkzeugmaschine während der Bearbeitung nicht anderweitig nutzen zu können, sind bei der Kalkulation zu berücksichtigen.

Bei der Großserienfertigung von Bauteilen eingesetzte Werkzeugmaschinen bestehen in der Regel aus modularen Baugruppen wie beispielsweise dem Antrieb, der Steuerung, Führungen, die das Werkzeug auf bestimmten Bewegungsbahnen führen, sowie Messsystemen und dienen der - zumeist automatisierten - Fertigung von Werkstücken in einer vorgegebenen Form anhand einer definierten relativen Bewegung zwischen Werkstück und Werkzeug.

Die Gestaltung der Werkzeugmaschine findet dabei in einem Spannungsfeld zwischen Spezialisierung und Flexibilität statt. Bei einer hohen Spezialisierung der Werkzeugmaschine ist es möglich, hohe Stückzahlen in geringer Bearbeitungszeit zu fertigen. Diese Optimierung findet dabei aber zu Lasten der Flexibilität der Werkzeugmaschine statt.

Hierbei werden Werkzeugmaschinen besonders im Hinblick auf die Bearbeitungsprozesse Drehen oder Fräsen optimiert. Bei einem Drehzentrum wird das Werkstück über ein Futter von der Hauptspindel mit einer Drehzahl beaufschlagt und von einem nur translatorisch verfahrbar angeordneten Werkzeug bearbeitet. Umgekehrt wird in Fräszentren das Werkzeug von der Spindel gehalten und mit einer Drehzahl derart beaufschlagt, dass nun das zumeist nur translatorisch verfahrbar angeordnete Werkstück spanabhebend bearbeitet werden kann.

Eine Ausgestaltung der Werkzeugmaschinen wird dabei im Hinblick auf eine Optimierung der Bearbeitungszeit je nach vorgesehenem Bearbeitungsverfahren, d.h., Drehen oder Fräsen, gewählt. Die Bearbeitungszeit lässt sich dabei grundsätzlich in zwei Gruppen unterteilen: die Hauptzeit und die Nebenzeit. Die Hauptzeit gibt dabei diejenige Zeit an, in der ein unmittelbarer Fortschritt erzielt wird, d.h., das Werkzeug zur Bearbeitung in Eingriff steht und das Werkstück, beispielsweise spanabhebend, bearbeitet werden kann. Im Gegensatz dazu kennzeichnet die Nebenzeit die Hilfszeit, die für Nebentätigkeiten, die nur mittelbar zum Erfüllen der Arbeitsaufgabe dienen, benötigt wird.

Findet eine Spezialisierung der Maschine statt, so wird die Nebenzeit auf eben diese vorgesehenen Bearbeitungsprozesse hin optimiert. Soll jedoch die Flexibilität der Werkzeugmaschine erhöht werden, müssen hierfür zusätzliche Greifereinheiten oder Robotereinheiten integriert werden, um der Werkzeugmaschine alternative Bearbeitungsmittel zur Verfügung zu stellen. Die Nebenzeiten des Bearbeitungsprozesses steigen mit dieser Erhöhung der Flexibilität stark an.

Es gibt daher Versuche, die Trennung zwischen den Bearbeitungsverfahren Drehen und Fräsen aufzubrechen, um damit Flexibilität zu gewinnen. Dies ist jedoch mit einigen Schwierigkeiten verbunden, da in Drehzentren nur rotationssymmetrische Werkstücke bearbeitet werden können. Dies verringert die Flexibilität der möglichen, zu bearbeitenden Werkstückgeometrien und damit der möglichen durchführbaren Bearbeitungsprozesse erheblich. Um dieser Problematik zu begegnen, gibt es Bestrebungen durch zusätzliche Vorkehrungen die durch die Rotation entstehenden Unwuchten der Werkstücke auszugleichen.

### Stand der Technik

Der Stand der Technik offenbart hierzu beispielsweise in der EP 1 771 713 B1 einen Wuchtring. Dieser wird an einer Umfangsfläche eines auszuwuchtenden Bauteils befestigt. Dieser Wuchtring weist einen ringförmig geschlossenen Haltering auf, mit dem er im Schrumpfsitz auf der Umfangsfläche gehalten wird. Zudem weist er einen eine radial verstellbare Wuchtmasse bildenden Ringkörper auf, der über eine Federlenkeranordnung in Form einer sich koaxial zur Drehachse radial zwischen dem Haltering und dem Ringkörper erstreckenden Hülse mit dem Haltering verbunden ist. In Umfangsrichtung, in gleichen Winkelabständen verteilt, sitzen in Gewindelöchern des Ringkörpers drei von radial außen zugängliche, radial verschraubbare Stellschrauben, die die Hülse in Durchgangslöchern durchsetzen und sich am Außenumfang des seinerseits am Bauteil fixierten Halterings abstützen. Durch Verschrauben der Stellschrauben kann der Ringkörper aus seiner zur Drehachse konzentrischen Ruhelage mit zur Drehachse im Wesentlichen paralleler Rotationssymmetrieachse radial in eine exzentrische Lage verstellt werden, wobei die Größe und Winkellage der Exzentrizität durch die Einstellung der drei Stellschrauben wählbar ist.

Die auf diese Weise eingestellte Exzentrizität des Ringkörpers soll dabei so gewählt werden, dass die von dem Ringkörper erzeugte Unwucht eine auftretende Unwucht des Bauteils kompensiert. Der Haltering wird hier passgenau auf eine entsprechende Umfangsfläche des Bauteils aufgeschoben. Dies geschieht mithilfe der Wärmeschrumpftechnik, eines Anschraubens an dem Bauteil oder einem Verschweißen oder Ankleben. Hierdurch werden Teile der Oberfläche des auszuwuchtenden Bauteils durch den Wuchtring bedeckt, so dass diese nicht mehr zur Bearbeitung frei liegen. Zudem wird die Oberflächengüte des Bauteils durch das Aufbringen des Wuchtrings beeinträchtigt.

Ähnlich wird in der EP 1 749 617 A1 eine Mehrzahl von Strukturen zum Auswuchten eines Bauteils vorgeschlagen. Diese Strukturen sind in Form von Gewichten in sich radial nach außen erstreckenden Führungen angebracht. Am Ende der Führungen sind jeweils Stopper angeordnet, welche das Gewicht auch bei hoher Drehzahl in der Führung halten sollen. Zwischen Stopper und Gewichten sind jeweils Federn in den Führungen angeordnet. Durch diese können die Gewichte der Unwucht des Bauteils entsprechend eine bestimmte Position in der Führung einnehmen. Da die Federn die Gewichte elastisch halten, wird hier durch ein Pendeln der Gewichte eine Unwucht des Bauteils gedämpft. Die Position der Gewichte ist dabei von der Drehzahl des Bauteils abhängig und kann nur in einem geringen Ausmaß, durch einen Stopper am Außenrand begrenzt, variiert werden. Damit ist die Ausgleichsmöglichkeit, genauer die maximal ausgleichbare Unwucht eines Bauteils, und damit die mögliche Geometrie des Bauteils stark eingeschränkt. Durch die Elastizität der Feder werden mögliche Unwuchten eines Bauteils zwar gedämpft, allerdings können durch das Ausschwingen der Feder erzeugte Vibrationen entstehen. Durch sich auf das Bauteil übertragende Vibrationen sinkt die Bearbeitungsgenauigkeit. Dies führt zu einer Verschlechterung der möglichen Fertigungstoleranzen, da etwa die Oberflächenrauigkeit durch zwischen Bauteil und Werkzeug auftretende Vibrationen erhöht wird. Die EP 1 749 617A1 gibt somit eine Technik an die Hand, mit welcher Werkstücke von nur geringer Komplexität und bei nur niedriger Drehzahl mit lediglich eingeschränkter Präzision bearbeitet werden können.

Werkstückadapter zur Verwendung in einer Werkzeugmaschine sowie entsprechende Werkzeugmaschinen und Fertigungsverfahren sind zudem Gegenstand der DE 10 2008 023 813 A1, der WO 01/58641 A1 sowie der EP 2 210 702 A1, die den nächstkommenden Stand der Technik bildet und einen Werkstückadapter mit den Merkmalen des Oberbegriffs des Anspruchs 1 offenbart.

Ausgehend vom Stand der Technik liegt der Erfindung die Aufgabe zugrunde, eine Technologie anzubieten, mit welcher nicht rotationssymmetrische Werkstücke selbst mit komplexen Geometrien zur spanabhebenden Bearbeitung ohne Vibrationen stabil - und nahezu unwuchtfrei - durch eine Werkzeugmaschine mit einer Rotation beaufschlagt werden können.

### Kurzfassung der Erfindung

Diese Aufgabe wird durch einen Werkstückadapter zur Verwendung in einer Werkzeugmaschine mit den Merkmalen des Anspruchs 1 sowie einem Werkstückspannsystem mit den Merkmalen des Anspruchs 7 gelöst.

Der erfindungsgemäße Werkstückadapter zur Verwendung in einer Werkzeugmaschine weist eine Adaptergrundplatte, einen Spannanschluss, mittels welchem der Werkstückadapter mit einem Spannelement rotatorisch und translatorisch fest verbunden werden kann, eine Werkstückaufnahme, und ein Werkstückverbindungselement, das Haltemittel zum lösbaren Aufnehmen eines Werkstücks und Verbindungsmittel zum Verbinden mit dem Werkstückadapter aufweist, auf, wobei auf einer Seite der Adaptergrundplatte zumindest drei Werkstückanschlusselemente zur Ausbildung der Werkstückaufnahme angeordnet sind, mittels welcher ein Werkstück über das Werkstückverbindungselement an dem Werkstückadapter anbringbar ist, der Spannanschluss auf einer der Werkstückaufnahme gegenüberliegenden Seite der Adaptergrundplatte angeordnet ist, und das Spannelement über eine Spindelaufnahme an einer motorisch betriebenen Spindel der Werkzeugmaschine anbringbar ist, zur Bearbeitung des Werkstücks durch ein Verfahren und Rotieren der Spindel.

Durch den erfindungsgemäßen Werkstückadapter wird eine Verbindung zwischen einem Werkstück und einer Werkzeugmaschine geschaffen, wodurch selbst Werkstücke mit komplexer Geometrie zur Bearbeitung mit einer Drehzahl beaufschlagt werden können. Diese Verbindung wird möglich, indem der Werkstückadapter sowohl eine Schnittstelle zur Aufnahme eines Werkstücks als auch eine Schnittstelle zur Integration in einem Spannelement aufweist. Das von dem Spannelement über den Werkstückadapter aufgenommene Werkstück kann somit in der Spindel einer Werkstückmaschine gespannt werden.

Die oben beschriebene Hürde bei der Flexibilitätssteigerung, verursacht durch den zu treffenden Kompromiss zwischen den Bearbeitungsverfahren Drehen und Fräsen, kann mit Hilfe des erfindungsgemäßen Werkstückadapters überwunden werden. Werden in der Spindel eines Fräszentrums herkömmlich nur Werkzeuge zur Beaufschlagung einer Drehzahl aufgenommen, können in derselben Spindel über den Werkstückadapter nun auch Werkstücke aufgenommen werden. Hierdurch wird die Anzahl von in einer Werkzeugmaschine durchführbaren Bearbeitungsprozesse erheblich erhöht. Dem Widerspruch zwischen einer hohen Spezialisierung von Werkzeugmaschinen und der möglichen erreichbaren Flexibilität derselben kann daher durch den erfindungsgemäßen Werkstückadapter begegnet werden.

Zudem weist der Werkstückadapter ein Werkstückverbindungselement auf, durch welches er Werkstücke lösbar zur Bearbeitung aufnehmen kann. Da die Verbindung zwischen Adapter und Werkstück lösbar ausgebildet ist, kann der Werkstückadapter bei einer Mehrzahl von Werkstücken verwendet werden. Hierdurch wird eine Steigerung der Flexibilität der Werkzeugmaschine zu vernachlässigbar geringen Mehrkosten erreicht. Der Werkstückadapter kann zudem bei einer Mehrzahl von Werkstücken verwendet werden, wodurch sich die Kosten eines Werkstückadapters auf eine Mehrzahl von Werkstücken umlegen lassen. Zudem ist der Werkstückadapter durch seine einfache Konstruktion in der Herstellung günstig. Dieser weist durch seine geringe Anzahl von Hauptbestandteilen aus Adaptergrundplatte, Spannanschluss sowie Werkstückaufnahme und Werkstückverbindungselement eine einfache und somit kostengünstige Gestaltung auf. Dieser Vorteil wird durch das Ausbilden von zumindest drei Werkstückanschlusselemente verstärkt.

Durch die erfindungsgemäßen zumindest drei Anschlusselemente wird eine ausreichende Bestimmung der Aufnahmeebene des Werkstücks über das Werkstückverbindungselement erreicht. Durch diese drei Werkstückanschlusselemente wird somit eine sichere Aufnahme des Werkstücks bei möglichst geringem Materialaufwand erreicht. Somit werden nicht nur die Materialkosten des Adapters gering gehalten, auch wird ein zusätzliches auf die Spindel wirkendes Gewicht des Werkstückadapters möglichst niedrig gehalten. Das von einer Antriebseinheit der Werkzeugmaschine für die Rotation des Werkzeugs bereitzustellende Drehmoment erhöht sich durch das geringe Gewicht des Werkstückadapters nur unwesentlich.

Gemäß dem erfindungsgemäßen Werkstückadapter stehen die zumindest drei Werkstückanschlusselemente von der Adaptergrundplatte derart hervor, dass das Werkstückverbindungselement an zumindest drei Punkten an dem Werkstückadapter gehalten wird, und in einer Ebene parallel zur Adaptergrundplatte liegen, die senkrecht zu der Rotationsachse der Spindel ist.

Durch diese erfindungsgemäße Ausgestaltung des Werkstückadapters wird eine bestimmte und somit sichere Aufnahme des Werkstückverbindungselements erreicht. Die Werkstückverbindungselemente erstrecken sich mit anderen Worten von der Adaptergrundplatte parallel zur während der Bearbeitung des Werkstücks ausgebildeten Rotationsachse. Durch eine zur Rotationsachse parallele Ausbildung der Werkstückverbindungselemente wird kein sich veränderndes Trägheitsmoment über die Länge der Werkstückverbindungselemente erreicht. Die durch die Werkstückanschlusselemente auf die Adaptergrundplatte bezüglich der Rotationsachse wirkenden Fliehkräfte heben sich durch das Zusammenwirken der zumindest drei sich parallel erstreckender Werkstückanschlusselemente auf, da sich die Länge der einzelnen Werkstückanschlusselemente entspricht. Da die Werkstückanschlusselemente zusammen mit dem Werkstückverbindungselement Verbindungspunkte aufweisen, welche auf einer zur Rotationsachse parallelen Ebene liegen, heben sich auch hier die durch die Rotation erzeugten Fliehkräfte auf.

Durch die gesamte Ausgestaltung des Werkstückadapters können mögliche aus der Rotation resultierende Fliehkräfte vermieden werden, welche andernfalls durch Gegenkräfte in der Einspannung der Spindel, d.h., durch Spannelemente der Spindel, ausgeglichen werden müssten oder in einer unrunden, d.h., nicht einer der Rotationsachse der Spindel entsprechenden Rotation münden würden. Durch die Drei-Punkt-Aufnahme wird das Werkstückverbindungselement zudem in vorteilhafter Weise äußerst einfach, d.h., mit der minimal nötigen Anzahl von Elementen zum Begrenzen der Freiheitsgrade auf einer Ebene, festgelegt. Zudem können bei einer Wahl von genau drei Werkstückanschlusselementen eine Überbestimmtheit des Systems und somit auftretende Kräfte zwischen den Werkstückanschlusselementen vermieden werden.

Bei einer Ausführungsform des erfindungsgemäßen Werkstückadapters können die zumindest drei Werkstückanschlusselemente auf der Adaptergrundplatte senkrecht zu der Rotationachse der Spindel verschiebbar und arretierbar sein.

Durch die Werkstückanschlusselemente wird das Werkstückverbindungselement aufgenommen. Dieses Werkstückverbindungselement ist direkt mit dem jeweiligen Werkstück verbunden. Um eine Flexibilität der Werkzeugmaschine zu gewährleisten, ist es notwendig, verschiedenartige Geometrien von Werkstücken in der Werkzeugmaschine bearbeiten zu können. Daher ist es hilfreich, wenn schon das Werkstückverbindungselement in seiner Geometrie variabel ausgestaltet sein kann. Somit kann die Verbindung zwischen Werkstückverbindungselement und Werkstück an die jeweiligen Erfordernisse zur Bearbeitung eines bestimmten Werkstücks angepasst werden. So kann es nötig sein, das Werkstückverbindungselement für komplexe Werkstücke großflächiger auszugestalten. In diesem Fall ist es vorteilhaft, die Abstände der Verbindungspunkte zwischen Werkstückverbindungselement und Werkstückanschlusselementen groß zu halten.

Sollen dagegen kleine Werkstücke bearbeitetet werden, so ist es vorteilhaft ein kleines Werkstückverbindungselement zu verwenden, um etwa das Gewicht gering halten zu können. Durch ein Verschieben der Werkstückanschlusselemente auf der Adaptergrundplatte ist somit die Schnittstelle, d.h., die Anordnung der Verbindungspunkte zwischen Werkstückanschlusselementen und Werkstückverbindungselement flexibel, je nach zu bearbeitenden Werkstück, variierbar.

Bei einer weiteren Ausführungsform des erfindungsgemäßen Werkstückadapters kann das Werkstückverbindungselement Verbindungsöffnungen aufweisen, in welche vordere, von der Adaptergrundplatte beabstandete Enden der zumindest drei Werkstückanschlusselemente eingefügt werden können, und das Werkstückverbindungselement formschlüssig über zumindest ein Befestigungselement lösbar mittels der Enden der zumindest drei Werkstückanschlusselemente gehalten werden kann.

Durch das Ausbilden von Verbindungsöffnungen in dem Werkstückverbindungselement ist eine Verbindung mit geringem konstruktiven Aufwand sowie materialsparenden Maßnahmen möglich. Da die Verbindung zwischen den Werkstückanschlusselementen und dem Werkstückverbindungselement lösbar ausgestaltet ist, können ein Anbringen von einem Werkstück an dem Werkstückverbindungselement und ein Verbinden des Werkstückverbindungselements mit den Werkstückanschlusselementen separat erfolgen. Hierdurch vereinfacht sich die Handhabung der Werkstücke erheblich.

Mit anderen Worten ist es möglich, das Werkstück auf dem Werkstückverbindungselement zuerst anzubringen und eine weitere Handhabung des Werkstücks zur Befestigung an der Spindel über den Werkstückadapter nur noch mittels der Handhabung des Werkstückverbindungselements zu realisieren. Hierdurch können Beschädigungen des Werkstücks, etwa durch eine Beschädigung der Werkstückoberfläche durch Greifereinheiten vermieden werden.

Nach einer weiteren Ausführungsform des erfindungsgemäßen Werkstückadapters kann der Werkstückadapter derart konfiguriert sein, dass er eine durch die Rotation der Spindel erzeugte Unwucht des Werkstücks bezogen auf die Rotationsachse der Spindel ausgleicht, indem die zumindest drei Werkstückanschlusselemente auf der Adaptergrundplatte derart angeordnet und mit dem Werkstückverbindungselement verbunden sind, dass eine Trägheitsachse des Werkstücks komplementär zu einer Trägheitsachse des Werkstückadapters bezogen auf die Rotation der Spindel ist, so dass sich die Trägheitsachsen des Werkstückadapters und des Werkstücks im zusammengefügten Zustand zu einer resultierenden Trägheitsachse verschieben, die mit der Rotationsachse der Spindel zusammenfällt.

Durch diese Konstruktion des Werkstückadapters, bei der die zumindest drei Werkstückanschlusselemente auf der Adaptergrundplatte, d.h. auf einer Ebene senkrecht zur Rotationsachse der Spindel, verschoben werden können, kann eine statische Unwucht des Werkstücks kompensiert werden. Damit können insbesondere Werkstücke mit komplexen Geometrien, genauer mit bezogen zur Rotationsachse der Spindel nicht rotationssymmetrischen Geometrien, aufgenommen und mit einer hohen Drehzahl beaufschlagt werden. Da Fliehkräfte quadratisch mit der Drehzahl ansteigen, entstehen bei der Bearbeitung nicht rotationssymmetrischer Werkstücke hohe, auf die Spannelemente der Spindel wirkende Kräfte. Bei herkömmlichen Werkzeugmaschinen ist damit die maximale, auf nicht rotationssymmetrische Werkstücke aufbringbare Drehzahl begrenzt, da andernfalls maximal zulässige Spannkräfte überstiegen werden und Beschädigungen der Werkzeugmaschine drohen.

Durch einen erfindungsgemäßen Ausgleich der auftretenden Unwucht des Werkstücks durch den Werkstückadapter werden die entstehenden Fliehkräfte ausgeglichen und somit nicht auf die Spannelemente der Spindel übertragen. Je nach Geometrie, genauer je nach Masseverteilung des zu bearbeitenden Werkstücks bezogen zur Rotationsachse und der sich damit ergebenden Trägheitsachse, können die Werkstückanschlusselemente dabei zudem derart verschoben werden, dass sich die Trägheitsachse bezogen zur Rotationsachse komplementär zur Trägheitsachse des Werkstücks verhält. Im Ergebnis werden senkrecht zur Rotationsachse wirkende Kräfte in der Spannvorrichtung der Spindel reduziert, welche andernfalls bei einer Unwucht des Werkstücks durch eine Rotation desselben entstehen würden.

Ein Trägheitstensor des Werkstücks ergibt sich aus der Winkelgeschwindigkeit, welche durch Rotation der Spindel auf das Werkstück übertragen wird, sowie aus dem Drehimpuls des Werkstücks bezogen zu seinem Massenmittelpunkt. Der Massenmittelpunkt liegt bei einem nicht rotationssymmetrisch ausgebildeten Werkstück nicht auf der Rotationsachse der Spindel. Durch eine entsprechende Verschiebung der Werkstückanschlusselemente kann nun der Massenmittelpunkt entsprechend komplementär zu dem Massenmittelpunkt gesetzt werden. Bei einer Verbindung von Werkstück und Werkstückadapter verschiebt sich daher der Massenmittelpunkt auf die Rotationsachse der Spindel.

Das Werkstück kann somit einen zu dem Werkstückadapter komplementären Trägheitstensor aufweisen. Auf die Spannelemente der Spindel während der Rotation derselben wirkende Kräfte können somit reduziert werden, wodurch letztlich auch die Belastungen auf das gesamte Spannsystem verringert werden können. Somit kann nicht nur die Bearbeitungsgenauigkeit erhöht, sondern auch die Lebenserwartung der Werkzeugmaschine gesteigert werden.

Der erfindungsgemäße Werkstückadapter erlaubt somit eine Bearbeitung eines rotierenden Werkstücks, welches eine nicht rotationssymmetrische Masseverteilung aufweist. Damit können komplexe Werkstücke bearbeitet werden.

Der Ausgleich, bzw. die Kompensation der aus dem Rotationszentrum verschobenen Trägheitsachse des Werkstücks durch den Werkstückadapter, mit dem Ergebnis, dass sich die Rotationsachse und die resultierende Trägheitsachse aus zusammengefügten Werkstückadapter und Werkstück entsprechen, wird durch den erfindungsgemäßen Werkstückadapter mit einfachen konstruktiven Mitteln erreicht. Im Vergleich zum Stand der Technik kann die Unwucht des Werkstücks unabhängig von der Drehzahl von Anfang an ausgeglichen werden.

Auch müssen keine zusätzlichen Gewichte an dem Werkstückadapter entsprechend der Masseverteilung des Werkstücks angebracht werden. Hierdurch können das Gewicht der Gesamtkonstruktion aus Werkstückadapter und Werkstück gering, und damit eine Überbeanspruchung der Spindelaufnahme verhindert werden. Folglich wird die Lebensdauer der Werkzeugmaschine von einer Verwendung des Werkstückadapters nicht beeinflusst.

Nach einer Weiterbildung des erfindungsgemäßen Werkstückadapters kann die Werkstückaufnahme eine mechanische Verbindung zwischen dem Werkstückverbindungselement und dem Werkstückadapter herstellen, durch welche eine axiale und radiale Relativbewegung zwischen Werkstück und Adapter verhinderbar ist.

Durch die erfindungsgemäße Werkstückaufnahme werden alle Freiheitsgrade zwischen Werkstückverbindungselement und Werkstückadapter eingeschränkt. Hierdurch wird in einfacher Weise die exakte Bewegung der Spindel, d.h. die Rotation der Spindel sowie ein translatorisches Verfahren der Spindel, auf das Werkstückverbindungselement übertragen. Durch diese Verbindung wird eine Berechnung der Ortskoordination sowie der Bewegungsinformation des Werkstückverbindungselements, und somit eine präzise Bearbeitung des Werkstücks ermöglicht.

Nach einer Weiterbildung des erfindungsgemäßen Werkstückadapters kann der Werkstückadapter über den Spannanschluss mit dem Spannelement verbunden werden, indem ein Spannelementanschluss des Spannelements hydraulisch oder pneumatisch mit Druck beaufschlagt wird.

Nach dieser Weiterbildung wird der Werkstückadapter an dem Spannelement befestigt, indem in dem Spannelement ein Druck, hydraulisch oder pneumatisch, erzeugt wird. Durch eine Druckbeaufschlagung wird somit ein schnelles Spannen des Werkstückadapters in dem Spannelement ermöglicht. Hierdurch wird die Bearbeitungszeit, d.h. die für die Bearbeitung von Bauteilen benötigte Zeit, gering gehalten, da die Nebenzeit durch schnelle Spannvorgänge gering bleibt. Die Methode der Befestigung des Werkstückadapters steht somit einem automatisierten, schnellen Spannverfahren offen.

Durch die Verwendung einer Spannkonstruktion mit hydraulischen oder pneumatischen Mitteln, wird zudem ein schneller Wechsel zwischen einem Spannen des Werkstückadapters sowie des Werkzeugs in dem Spannelement möglich. Für das Spannen des Werkzeugs sind somit keine weiteren Mittel notwendig, vielmehr können das gleiche Spannelement sowie das gleiche Spannverfahren für den Werkstückadapter und für das Werkzeug verwendet werden.

Hierdurch können sowohl das durch die Spindel mit Drehzahl beaufschlagte Werkstück sowie ein auf einem Bearbeitungstisch der Werkzeugmaschine nicht drehendes Werkstück bearbeitet werden. Die Flexibilität möglicher Bearbeitungsverfahren und somit der gesamten Werkzeugmaschine kann durch ein Spannmittel, welches bei dem Werkstückadapter ebenso wie bei Werkzeugen verwendet werden kann, erheblich gesteigert werden.

Nach einem weiteren Aspekt der Erfindung wird ein Werkstückspannsystem zur Verwendung in einer Werkzeugmaschine mit einer motorisch betriebenen Spindel ausgebildet, welches einen Werkstückadapter nach einem der vorhergehenden Aspekte, und ein Spannelement aufweist, wobei der Werkstückadapter über einen Spannanschluss an dem Spannelement anbringbar ist, das Spannelement über eine Spindelaufnahme an der motorisch betriebenen Spindel der Werkzeugmaschine zur Bearbeitung des Werkstücks durch ein Verfahren und Rotieren der Spindel anbringbar ist, und die Verbindung zwischen Werkstückadapter und Spannelement und/oder die Verbindung zwischen Spannelement und Spindel durch eine hydraulische oder pneumatische Druckbeaufschlagung erfolgt.

Mit diesem erfindungsgemäßen Werkstückspannsystem ist es möglich, die oben beschriebenen vorteilhaften Effekte zu erreichen. Da ferner neben dem Werkstückadapter auch das Spannelement selbst an der Spindel durch eine hydraulische oder pneumatische Druckbeaufschlagung anbringbar ist, kann die notwendige Spannzeit weiter reduziert werden. Zudem ist es bei einer hydraulischen Verbindung möglich, beide Elemente, genau das Spannelement und den Werkstückadapter, mit demselben Fluid zu spannen. Somit kann ein Leitungssystem, durch welches das entsprechende Fluid zugeführt wird, möglichst einfach ausgestaltet werden.

Gemäß einer Weiterbildung des Werkstückspannsystems kann zudem die hydraulische oder pneumatische Druckbeaufschlagung des Spannelementanschlusses des Spannelements durch einen mechanischen Mechanismus, einen elektromagnetischen Mechanismus und/oder einen hydraulischen Mechanismus hergestellt werden.

Bei einer Betätigung des Spannelementanschlusses durch eines der genannten Mittel ist es möglich, nicht nur das Spannen des Werkstückadapters selbst, sondern auch die hierfür notwendige Betätigung automatisiert durchzuführen. Somit kann der gesamte Spannvorgang des Werkstückadapters frei von manuellen Eingriffen gestaltet werden, wodurch die Bearbeitungszeit sowie der Automatisierungsgrad der Werkzeugmaschine vorteilhaft beeinflusst werden können.

Gemäß einer Weiterbildung des erfindungsgemäßen Werkstückspannsystems sind an dem Spannelement über den Spannelementanschluss anstelle von Werkstückadaptern auch Werkzeuge zur Bearbeitung eines Werkstücks aufnehmbar.

Wie oben erwähnt kann durch eine derartige Ausgestaltung des Spannelementanschlusses die Anzahl möglicher, an dem Werkstück ausführbarer, Bearbeitungsverfahren erheblich erhöht werden.

Nach einer Weiterbildung des Werkstückspannsystems kann der Spannelementanschluss derart konfiguriert sein, dass er in einen geöffneten und einen geschlossenen Zustand bringbar ist, wobei der Werkstückadapter in dem geschlossenen Zustand des Spannelementanschlusses rotatorisch und translatorisch fest mit dem Spannelement verbunden ist, und der Werkstückadapter in dem geöffneten Zustand des Spannelementanschlusses aus dem Spannelement entnehmbar ist.

Indem der Werkstückadapter je nach Zustand des Spannelementanschlusses aus dem Spannelement entnehmbar ist oder durch diesen fest gehalten wird, müssen keine zusätzlichen Mittel zur Befestigung bzw. Lösen des Werkstückadapters, vorgesehen werden. Die Handhabung des Werkstückadapters ist somit auf einfache Weise ohne zusätzliche Vorkehrungen möglich.

Gemäß einer Weiterbildung des erfindungsgemäßen Werkstückspannsystems kann der Spannelementanschluss des Spannelements zum Spannen des Werkstückadapters durch eine an der Werkzeugmaschine ausgebildete Vorrichtung automatisiert betrieben werden, indem die Spindel und/oder die Vorrichtung relativ zueinander verfahrbar ausgebildet sind, so dass ein Kontakt zwischen einem Kontaktelement der Vorrichtung und einem Verbindungsanschluss des Spannelements herstellbar ist.

Durch ein Ausbilden einer Schnittstelle des Spannelements zum Spannen des Werkstückadapters, ist es möglich eine Vorrichtung innerhalb der Werkzeugmaschine zu integrieren, mit welcher der Spannelementanschluss betreibbar ist. Indem sowohl die Vorrichtung als auch die Spindel zueinander verfahrbar ausgebildet sind, kann die Zeit, die zur Betätigung benötigt wird, erheblich reduziert werden. Zudem kann das Spannen des Werkstückadapters autonom, d.h., ohne externe Vorrichtung erfolgen. So lassen sich der Automatisierungsgrad sowie die Bearbeitungszeit vorteilhaft gestalten.

### Kurze Beschreibung der Zeichnung

Die Merkmale und Vorteile sowie die technische und wirtschaftliche Bedeutung einer beispielhaften Ausführungsform der vorliegenden Erfindung werden nachfolgend Bezug nehmend auf die beigefügte Zeichnung beschrieben, hierbei zeigt:
- Fig. 1: eine Prinzipdarstellung eines Werkstückspannsystems mit einem Werkstückadapter; und
- Fig. 2: eine Prinzipdarstellung einer Ausführungsform eines Werkstückadapters.

### Detaillierte Beschreibung der Ausführungsform

Nachfolgend wird eine Ausführungsform der Erfindung im Detail mit Bezug auf die beigefügten Zeichnungen beschrieben.

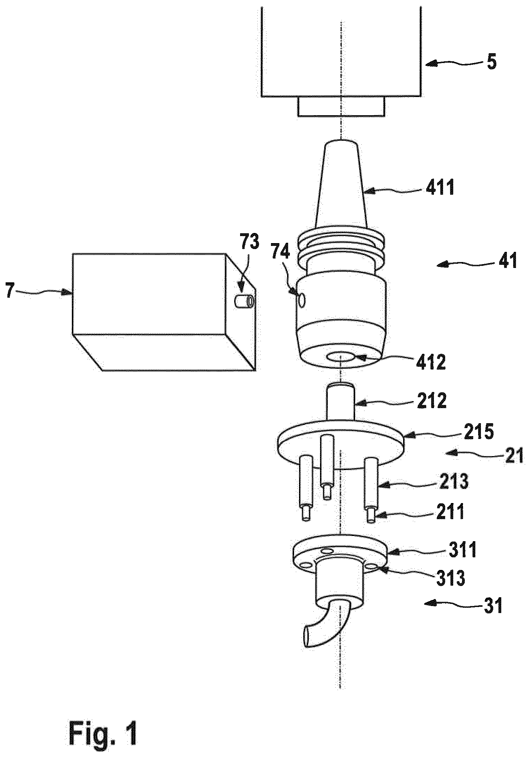

Fig. 1 zeigt eine Prinzipdarstellung eines Werkstückspannsystems mit einem Werkstückadapter 21. Der Werkstückadapter 21 kann in Verbindung mit einem Spannelement 41 in einer Werkzeugmaschine 1, beispielsweise zur spanabhebenden Bearbeitung, verwendet werden. Hierfür wird das Spannelement 41 in einer Spindel 5 der Werkzeugmaschine 1 eingespannt, wobei die Spindel 5 zur Bearbeitung eines Werkstücks 31 mit einer Rotation beaufschlagt wird. Die Werkzeugmaschine 1 kann dabei als eine herkömmlich bekannte Fräsmaschine, Drehmaschine, ein Fräszentrum, ein Bearbeitungszentrum oder ähnliches ausgebildet sein. Die Werkzeugmaschine 1 weist die motorisch betriebene Spindel 5 auf, welche durch verschiedene an der Werkzeugmaschine 1 ausgebildete Schlitten in X-, Y-, und Z-Richtung verfahren werden kann.

Die Spindel 5 kann dabei als Pick-up Spindel zur selbstständigen Aufnahme von Werkzeugen oder Werkstücken 31 ausgebildet sein, kann aber auch über einen separat ausgebildeten Greifer oder eine Robotereinheit bestückt werden. Weiterer Bestandteil der Werkzeugmaschine 1 ist ein Bearbeitungstisch. Auf diesem können je nach Art der Bearbeitung verschiedenartige Werkzeuge sowie Werkstücke 31 gehalten werden. Auch der Bearbeitungstisch kann zur Bearbeitung des Werkstücks 31 zumindest translatorisch verfahren werden. Zudem können einzelne, auf dem Bearbeitungstisch angeordnete Spannelemente, ähnlich der Spindel 5 motorisch betrieben, mit einer Drehzahl beaufschlagt werden.

Um Werkstück 31 und Werkzeuge zu und von der Werkzeugmaschine 1 zu führen, ist an der Werkzeugmaschine 1 zumindest ein Magazin ausgebildet. Dieses Magazin kann als ein kombiniertes Magazin sowohl zur Aufnahme von Werkstücken 31 und auch Werkzeugen vorgesehen sein.

Alternativ können mehrere Magazine, beispielsweise in Form von Fördermagazinen, Kettenmagazinen, Teller- oder Ringmagazinen ausgebildet sein. Um die Bearbeitung von Werkstücken 31 in der Werkzeugmaschine 1 zu steuern, weist diese eine Steuerung auf. Die Steuerung berechnet, steuert und kontrolliert neben den verschiedenen Bewegungen, wie etwa den Verfahrwegen oder der Rotation der Spindel 5, auch die Bewegungen weiterer Elemente der Werkzeugmaschine 1, wie etwa ein Verfahren des Bearbeitungstischs 6.

Die Steuerung ist hier als numerische Steuerung ausgeführt, kann aber auch durch eine speicherprogrammierbare Steuerung ausgeführt sein. Weiter kann die Werkzeugmaschine 1 ein Bett, Schlitten, Führungen, Bedienelemente, sowie Baugruppen zur Ver- und Entsorgung mit Betriebsmitteln, wie Schmier- oder Schneidöl, Kühlmittel, und dergleichen aufweisen.

Wie oben erwähnt, können neben Werkstücken 31 auch Werkzeuge mittels des Spannelements 41 in der Spindel 5 aufgenommen werden. Hierfür enthält die Spindel 5 eine Standard-Aufnahmeschnittstelle, wie eine HSK-Schnittstelle (Hohlschaftkegel-Schnittstelle), eine Kurzkegelaufnahme, eine Steilkegel-Aufnahme oder ähnliches. Über diese Standard-Werkzeugaufnahme können verschiedenste Werkzeuge in der Spindel 5 aufgenommen werden und gegen ein auf dem Bearbeitungstisch gespanntes Werkstück 31 verfahren werden, um dieses beispielsweise spanabhebend zu bearbeiten. Neben einer spanabhebenden Bearbeitung können in der Werkzeugmaschine auch weitere Bearbeitungsverfahren, wie etwa Schweißen, Kleben oder Lackieren ausgeführt werden. Um diese Flexibilität zu gewährleisten, kann erfindungsgemäß anstelle von Werkzeugen in der Spindel 5 über die Spindelschnittstelle 411 des Spannelements 41 auch ein Werkstückadapter 21 aufgenommen werden.

Hierfür ist die Schnittstelle des Spannelements 41 derart als Standard-Schnittstelle, etwa als Hohlschaftkegel, Steilkegel, oder ähnlichem, ausgebildet, dass sie mit einer in der Spindel 5 ausgebildeten, oben genannten Standard-Werkzeugaufnahme kompatibel ist. Der Mechanismus zum Spannen des Spannelements 41 in der Spindel 5 kann über ein mechanisches Element, wie eine Kraftspannspindel, einen Spanndorn oder Spannfutter erfolgen. Hierbei wird das Spannelement 41 kraftschlüssig von der Spindel 5 rotatorisch und translatorisch bestimmt gehalten.

Neben dieser Ausführung des mechanischen Spannens kann das Spannelement 41 aber auch über einen pneumatischen oder hydraulischen Mechanismus gespannt werden. Hierbei können bereits in der Werkzeugmaschine 1 verwendete Fluide zur Betätigung verwendet werden. Somit kann das Spannelement 41 beispielsweise mittels eines Hydrodehnspannfutters oder -dorns erfolgen.

Zur Aufnahme des Werkstückadapters 21 ist das Spannelement 41 an der der Spindelschnittstelle 411 gegenüberliegenden Seite mit einem Spannelementanschluss 412 ausgebildet. Dieser Spannelementanschluss 412 kann etwa als Hydrodehnspanndorn oder Hydrodehnspannfutter ausgebildet sein. Hierfür ist in dem Spannelement 41 ein Leitungssystem ausgebildet, über welches ein Spannen des Werkstückadapters 21 erreicht werden kann.

Das Leitungssystem kann hierfür mit einem Fluid, etwa Öl, welches vorteilhaft in der Werkzeugmaschine 1 auch als Schmieröl verwendet wird, oder einem anderen Medium wie etwa Luft, befüllt werden. Genauer wird über das Leitungssystem ein Radius eines Dehnspanndorns oder eines Dehnspannfutters verringert oder erweitert. Bei Verwendung eines Dehnspannfutters verringert sich beispielsweise bei einer Druckbeaufschlagung des Leitungssystems der Radius des Futters.

Zusätzlich kann zwischen Dehnspanndorn oder -futter eine Zwischenhülse verwendet werden, um Elemente mit verschiedenen Durchmessern spannen zu können. Der Druck im Inneren des Leitungssystems wird durch eine externe Vorrichtung 7 gesteuert. Diese Vorrichtung 7 kann ebenso an der Werkzeugmaschine 1, etwa am Spindelkasten, ausgebildet sein. Alternativ kann die Vorrichtung an einem Magazin ausgebildet sein, in welchem die Werkstückadapter 21 bevorratet sind.

Dabei kann die Spindel 5 zum Magazin, d.h., zu dem Werkstückadapter 21 verfahren, und durch die Vorrichtung 7 gesteuert, den Werkstückadapter 21 in dem Spannelementanschluss spannen, bzw. den Werkstückadapter 21 in das Magazin ausgeben. Alternativ kann die Spindel 5, in welcher das Spannelement 41 gespannt ist, zu der separat vorgesehenen Vorrichtung 7 verfahren werden. Als weitere Alternative oder zusätzlich kann die Vorrichtung 7 auf einem Schlitten oder ähnlichem verfahrbar ausgebildet sein, so dass diese in Richtung der Spindel 5 zu dem Spannelement 41 verfahrbar ist.

Über die Betätigung des am Spannelement 41 ausgebildeten Verbindungsanschlusses 74 wird mittels eines Kontaktelements 73 der Vorrichtung 7 der Druck im Inneren des Spannelements 41, genauer in dem Leistungssystem des Spannelements 41, gesteuert. Der Verbindungsanschluss 74 kann seitlich, d.h., an einer Außenseite des Spannelements 41 ausgebildet sein, die im Wesentlichen parallel zu der Längsachse des Spannelements 41 verläuft.

Alternativ kann der Verbindungsanschluss 74 derart ausgebildet sein, dass er an einer der Spindel 5 zugewandten Seite des Spannelements 41 liegt. Beispielsweise kann der Verbindungsanschluss 74 über eine Drehdurchführung mit einem in der Werkzeugmaschine 1 vorhandenem Fluid über eine in der Spindel 5 vorgesehene Leitung betätigt werden.

Das Kontaktelement 73 der Vorrichtung 7, durch welches der Verbindungsanschluss 74 betätigt wird, kann als Druckstift, Fluidanschluss oder elektromagnetisches Element ausgebildet sein. Ist das Kontaktelement 73 beispielsweise als Druckstift ausgeführt, so öffnet oder schließt dieser Druckstift bei einem Zusammenführen von Kontaktelement 73 und Verbindungsanschluss 74 ein Ventil, welches im Spannelement 41 ausgebildet ist. Über dieses Ventil wird der Druck im Leitungssystem des Spannelements 41 derart verändert, dass der Werkstückadapter 21 in dem Spannelement 41 gespannt oder ausgeworfen werden kann.

Ebenso kann ein elektromagnetisches Ventil zur Steuerung des Drucks ausgebildet sein, und über einen elektromagnetischen Mechanismus über das Kontaktelement 73 betätigt werden. Alternativ kann der Druck des Fluids oder Mediums im Inneren des Spannelements 41 nicht nur von außen gesteuert, sondern das entsprechende Fluid oder Medium über das Kontaktelement 73 der Vorrichtung 7 in das Leitungssystem des Spannelements 41 eingeleitet werden.

In diesem Fall ist in der Vorrichtung 7 ein Tank ausgebildet, aus dem über eine Leitung, dem Leitungssystems im Inneren des Spannelements 41 extern das Fluid, bzw. Medium zugeführt werden kann. Mit anderen Worten wird das Leitungssystem des Spannelements 41 mit dem Fluid, bzw. Medium der Vorrichtung 7 betankt oder entleert, so dass sich ein Druck im Leitungssystem und damit ein Radius des Spanndorns, bzw. Spannfutters ändern. Bei einem Verbinden von Kontaktelement 73 und Verbindungsanschluss 74 wird in diesem Fall das Leistungssystem hydraulisch oder pneumatisch von außen mit Druck beaufschlagt.

Alternativ kann die Druckänderung und damit ein Spannen bzw. Ausgeben des Werkstückadapters 21 auch manuell über eine Spannschraube erfolgen. Über diese Spannschraube kann ein Spannkolben in dem Leitungssystem bewegt werden. So wird etwa über ein Herausdrehen der Spannschraube der Druck im Leitungssystem verringert und bei einem Hereindrehen der Spannschraube erhöht.

Neben diesem oben erläuterten Hydrodehn-Mechanismus zum Spannen des Werkstückadapters 21 sind weitere Spannmechanismen wie über eine HSK-Schnittstelle, Steilkegel-Schnittstelle oder ähnliche Schnittstellen möglich. Je nach dem Befestigungs- bzw. Spannmechanismus des Werkstückadapters 21 an dem Spannelement 41 kann der Spannanschluss 212 des Werkstückadapters 21 als Kegel, Zylinder oder Ringelement ausgebildet sein.

Dieser Spannanschluss 212 ist integral, etwa durch Verschweißen oder Verkleben, mit einer Adaptergrundplatte 215 des Werkstückadapters 21 ausgebildet. Alternativ kann der Spannanschluss 212 auch mit der Adaptergrundplatte 215 durch ein Außengewinde des Spannanschlusses 212 und ein Innengewinde der Adaptergrundplatte 215 verschraubt, durch eine Presspassung verspannt oder in sonstiger Weise lösbar verbunden sein.

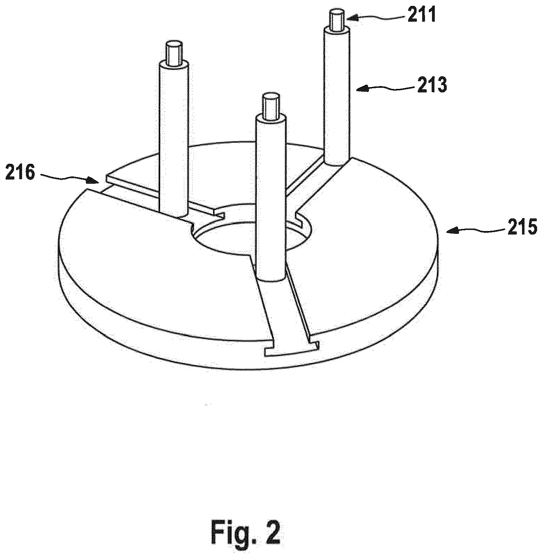

Die Adaptergrundplatte 215 ist in dem dargestellten Beispiel rund ausgebildet, kann aber auch polygonal ausgebildet sein. Auf der dem Spannanschluss 212 gegenüberliegenden Seite der Adaptergrundplatte 215 ist die Werkstückaufnahme 211 ausgebildet. Diese besteht, wie insbesondere auch in Fig. 2 dargestellt ist, aus zumindest drei Werkstückanschlusselementen 213, wodurch die minimale Anzahl zur Beschränkung der Freiheitsgrade auf einer Ebene erreicht wird und ungewünschte Bewegungen des Werkstücks vermieden werden. Diese drei Werkstückanschlusselemente 213 können ähnlich dem Spannanschluss 212 mit der Adaptergrundplatte 215 verschraubt, verspannt oder integral, etwa verschweißt oder verklebt ausgebildet sein.

Die Werkstückanschlusselemente 213 können als zapfenartige, zylindrische oder konisch ausgebildete Element ausgebildet sein und von der Adaptergrundplatte 215 in einer Richtung weg von der Spindel 5 hervorstehen, d.h., in einer Richtung, die parallel zu der Rotationsachse der Spindel 5 verläuft. Vorzugsweise sind die Werkstückanschlusselemente 213 in gleichen Winkeln bezogen zur Rotationsachse der Spindel 5 als Mittelpunkt, bzw. zur Mittelachse der Adaptergrundplatte 215, zueinander angeordnet.

Bei einer Ausführungsform der Erfindung können, wie im Detail in Fig. 2 gezeigt ist, die Werkstückanschlusselemente 213 auf der Adaptergrundplatte 215 verschiebbar angeordnet sein. So kann beispielsweise ein Abstand zwischen der Mittelachse der Adaptergrundplatte 215, welche vorzugsweise parallel zu einer Rotationsachse der Spindel 5 im zusammengebauten Zustand verläuft, für jedes Werkstückanschlusselement 213 einzeln variiert werden. Beispielsweise werden die Werkstückanschlusselemente 213 in Nuten 126 geführt, welche sich von dem Mittelpunkt der Adaptergrundplatte 215, welcher auf der Mittelachse, bzw. Rotationsachse der Spindel 5 liegt, gerade radial nach außen erstrecken.

Hierdurch wird der Winkel der Werkstückanschlusselemente 213 zueinander nicht verändert, während der Abstand zwischen den Werkstückanschlusselementen 213 und der Rotationsachse verändert werden kann. Auf diese Weise kann die durch die Werkstückanschlusselemente 213 bei Rotation der Spindel 5 erzeugte Zentrifugalkraft variiert werden. Mit Hilfe dieser durch das Verschieben der Werkstückanschlusselemente 213 erzeugbaren Variation an resultierenden Unwuchten, kann eine große Anzahl unterschiedlicher Werkstücke aufgenommen, mit einer Rotation beaufschlagt und weitgehend unwuchtfrei bearbeitet werden. Ein Werkstückadapter 21 kann somit für eine Reihe verschiedener Werkstücke 31 verwendet werden.

Sind die drei Werkstückanschlusselemente 213 in einem gleichen Abstand zur Rotationsachse sowie gleichen Winkelabständen zueinander auf der Adaptergrundplatte 215 angeordnet, so heben sich die entstehenden Fliehkräfte der Werkstückanschlusselemente 213 auf, so dass eine Trägheitsachse des Werkstückadapters 21 bezogen zur Rotationsachse der Spindel 5 mit dieser Achse zusammenfällt. In diesem Fall ist der Werkstückadapter 21 rotationssymmetrisch ausgebildet und kann derart angeordnet werden, dass seine Trägheitsachse, welche der Mittenachse entspricht, mit der Rotationsachse der Spindel 5 zusammenfällt.

Werden nun ein oder mehrere Werkstückanschlusselemente 213 auf der Adaptergrundplatte 215 verschoben, so heben sich die Fliehkräfte der Werkstückanschlusselemente 213 nicht mehr gegenseitig auf und die Trägheitsachse des Werkstückadapters 21 verschiebt sich bezüglich der Rotationsachse der Spindel 5. Mit anderen Worten liegt die durch die Rotation der Spindel 5 entstehende resultierende Trägheitsachse des Werkstückadapters 21 nicht im Rotationszentrum.

Über die Werkstückanschlusselemente 213 wird das Werkstückverbindungselement 311 mit dem Werkstückadapter 21 und somit im zusammengefügten Zustand mit der Spindel 5 verbunden. Die Rotation der Spindel 5 wird auf das Werkstückanschlusselement 213 über das Spannelement 41 und den Werkstückadapter 21 übertragen. Genauer erfolgt die Übertragung des Moments von der Spindel 5 auf das Spannelement 41 über die Verbindung zwischen der Aufnahmeschnittstelle der Spindel 5 und der Spindelaufnahme 411 des Spannelements 41.

Diese Verbindung beschränkt nach dem Spannen sowohl translatorische als auch rotatorische Freiheitsgrade, wodurch das Moment schlupffrei übertragen werden kann. Weiter wird das Moment von dem Spannelemente 41 auf den Werkstückadapter 21 über die durch Spannen erreichbare Verbindung zwischen dem Spannelementanschluss 412 des Spannelements 41 und dem Spannanschluss 212 des Werkstückadapters 21 übertragen. Auch diese Verbindung kann alle Bewegungsinformationen verlustfrei übertragen.

Schließlich wird das Spindelmoment von dem Werkstückadapter 21 auf das Werkstückverbindungselement 311 über die Verbindung zwischen den zumindest drei Werkstückanschlusselemente 213 und den Verbindungsöffnungen 313 des Werkstückverbindungselements 311 übertragen. Somit kann eine sichere und verlustfreie Übertragung des Spindelmoments auf das Werkstück 31 gewährleistet werden. Diese Übertragung ermöglicht eine hohe Bearbeitungsgenauigkeit.

Die Verbindung zwischen Werkstückverbindungselement 311 und Werkstückanschlusselementen 213 ist dabei vorzugsweise lösbar ausgebildet. Beispielsweise kann die Verbindung über einen Keil herbeigeführt werden, welcher am Radius der Endabschnitte von Werkstückanschlusselementen 213 ausgebildet ist. Hierzu ist das Werkstückverbindungselement 311 beispielsweise als Platte mit sich durch die Dicke der Platte erstreckenden Öffnungen ausgebildet.

Die an den Werkstückanschlusselementen 213 ausgebildeten Keile können federgespannt sein, so dass die Verbindung durch ein Aufstecken der Platte auf die Werkstückanschlusselemente 213 einfach herzustellen ist. Durch die nach unten wirkende Gewichtskraft liegt die Platte, d.h., das Werkstückverbindungselement 311, auf den Keilen auf.

Alternativ können die Werkstückanschlusselemente 213 an ihren von der Adaptergrundplatte 215 entfernt liegenden Enden Außengewinde aufweisen, wobei der Kerndurchmesser kleiner oder gleich dem Durchmesser der Werkstückanschlusselemente 213 ist, die etwa zylindrisch ausgebildet sind. Dem Außengewinde der Endabschnitte 211 der Werkstückanschlusselemente 213 entsprechend, sind in Bohrungen 313, welche sich durch das Werkstückverbindungselement 311 erstrecken, am Innenumfang Innengewinde vorgesehen. Die Werkstückanschlusselemente 213 können so mit dem Werkstückverbindungselement 311 verschraubt werden.

Zur axialen Sicherung können etwa an den Enden nach dem Verschrauben Kontermuttern aufgedreht werden. Die Werkstückanschlusselemente 213 sind hier beispielsweise als in der Adaptergrundplatte 215 drehbare Schrauben oder Bolzen mit Gewindeabschnitt ausgebildet. Die Adaptergrundplatte 215 kann zudem konisch verlaufende Vertiefungen zum Versenken der Schraubenköpfe der Werkstückanschlusselemente 213 aufweisen, so dass bei einer Rotation der Adaptergrundplatte 215 kein Luftwiderstand durch die von der Adaptergrundplatte 215 hervorstehenden Schraubenköpfe entsteht.

In ähnlicher Weise können die Werkstückanschlusselemente 213 durch in dem Werkstückverbindungselement 311 vorgesehene Bohrungen 313 geschraubt oder gesteckt werden, und am anderen Ende, d.h., an der, der Spindel 5 zugewandten Seite der Adaptergrundplatte 215 mit Kontermuttern gesichert werden. Auch für die Kontermuttern können in der Adaptergrundplatte 215, bzw. für die Schraubenköpfe in dem Werkstückverbindungselement 311 konische Vertiefungen vorgesehen sein. Mit anderen Worten kann durch Bohrungen 313 im Werkstückverbindungselement 311 ein Bolzen gesteckt werden, auf dessen Kopf das Werkstückverbindungselement 311 aufliegt und ein Gewindezapfen des Bolzes durch die Adaptergrundplatte 215, mit entsprechendem Innengewinde, geschraubt, und durch eine Kontermutter gesichert wird. Diese Verbindungsart ist entsprechend möglich, indem der Kopf auf der Adaptergrundplatte 215 aufliegt und der Gewindezapfen in Bohrungen mit Innengewinde des Werkstückverbindungselements 311 verschraubt und entsprechend gesichert wird.

Auch muss in der jeweiligen Platte, d.h., Adaptergrundplatte 215 bzw. Werkstückverbindungselement 311 kein Innengewinde ausgebildet sein, wenn am Ende ein Gewindezapfen durch eine Mutter gesichert werden kann, und das Werkstückverbindungselement 311 etwa durch einen Absatz einen Anschlag aufweist, durch welchen das Aufstecken der jeweiligen Platte begrenzt wird. Zum Versenken der Bauteile können wie oben beschrieben jeweils an der Adaptergrundplatte 215, bzw. dem Werkstückverbindungselement 311 Vertiefungen ausgebildet sein.

Alternativ können auch Stiftverbindungen hergestellt werden, indem Stifte durch die Adaptergrundplatte 215 und das Werkstückverbindungselement 311 pressgepasst werden. In Abhängigkeit der geforderten Fertigungstoleranzen des Werkstücks 31 sind auch Verbindungen mittels Sicherungssplinten oder Spreizhülsen anwendbar. Das Werkstückverbindungselement 311 schließlich bildet das Verbindungsstück, an welchem das Werkstück 31 selbst angebracht ist. Hierfür kann das Werkstückverbindungselement 311 beispielsweise als Flanschplatte mit Bohrungen zur Verbindung mit den Werkstückanschlusselementen 213 ausgebildet sein und ein Innengewinde zum Verschrauben mit dem Werkstück 31, an dem ein entsprechendes Außengewinde ausgebildet ist, aufweisen.

Auch hier sind verschiedenartige Verbindungen denkbar, um das Werkstück 31 an dem Werkstückverbindungselement 311 translatorisch und rotatorisch bestimmt sowie lösbar anzubringen. Beispielsweise können in dem Werkstück 31 Bohrungen senkrecht zur Rotationsachse sowie entsprechende Bohrungen an einem sich entlang der Rotationsachse erstreckenden, zylindrischen Fortsatz der Flanschplatte ausgebildet sein. Durch die Bohrungen kann anschließend ein Stift, Bolzen, eine Schraube oder ähnliches durch das Werkstück 31 und den Fortsatz der Flanschplatte gesteckt oder geschraubt werden.

Alternativ kann der Werkstückadapter 21 integral mit dem Werkstückverbindungselement 311 ausgebildet sein. So kann das Werkstückverbindungselement 311 beispielsweise fest mit der Adaptergrundplatte 215, etwa mittels Schweißen oder Kleben, angebracht sein. In diesem Fall sind die Werkstückanschlusselemente 213 nicht direkt mit dem Werkstückverbindungselement 311 verbunden. Die Werkstückanschlusselemente 213 dienen in diesem Fall nur dem Masseausgleich des Werkstücks 31, d.h., sie können auf der Adaptergrundplatte 215 verschoben werden, ohne das Werkstückverbindungselement 311 an ihren Enden aufzunehmen.

Als weitere Alternative können verschiedenartige Werkstückanschlusselemente 213 auf der Adaptergrundplatte 215 ausgebildet sein. Dabei kann ein Teil, beispielsweise drei, der Werkstückanschlusselemente 213 integral mit der Adaptergrundplatte sowie dem Werkstückverbindungselement 311 ausgebildet sein, d.h., diese fest verbinden. Der andere Teil, beispielsweise ebenso drei, der Werkstückanschlusselemente 213 kann verschiebbar auf der Adaptergrundplatte sowie verschiebbar auf dem Werkstückverbindungselement 311 verbunden sein. So dient ein Teil der Werkstückanschlusselemente 213 der Befestigung des Werkstückverbindungselements 311 an der Adaptergrundplatte 215 während der andere Teil den Masseausgleich, d.h., die Kompensation der Werkstückunwucht bewirkt.

Bei einer weiteren Modifikation sind die Werkstückanschlusselemente 213 derart mit der Adaptergrundplatte 215 und dem Werkstückverbindungselement 311 verbunden, das diese auf der Adaptergrundplatte 215 gedreht, d.h. um ihre eigene Achse rotiert, nicht aber verschoben werden können. Hier weisen die einzelnen Werkstückanschlusselemente 213 keine rotationssystemmetrische Form auf. Die Unwucht des Werkstücks 31 kann nun allein durch ein Drehen eines oder mehrerer Werkstückanschlusselemente 213 auf der Adaptergrundplatte 215 ausgeglichen werden.

Der Werkstückadapter 21 sowie das Spannelement 41 können aus Stahl, etwa Automatenstahl wie 10 S 20, 9 S20 oder 11 SMn 37, und ähnlichen gefertigt sein. Alternativ können je nach zu bearbeitenden Werkstücken aber auch weitere Materialien, wie etwa Aluminium, karbonfaserverstärkter Kunststoff oder ähnliches verwendet werden.

## Patentansprüche

1. Werkstückadapter (21) zur Verwendung in einer Werkzeugmaschine (1), aufweisend:
eine Adaptergrundplatte (215),
einen Spannanschluss (212), mittels welchem der Werkstückadapter (21) mit einem Spannelement (41) rotatorisch und translatorisch fest verbunden werden kann,
eine Werkstückaufnahme, und
ein Werkstückverbindungselement (313), das Haltemittel zum lösbaren Aufnehmen eines Werkstücks (31) und Verbindungsmittel zum Verbinden mit dem Werkstückadapter (21) aufweist,
wobei
der Spannanschluss (212) auf einer der Werkstückaufnahme gegenüberliegenden Seite der Adaptergrundplatte (215) angeordnet ist, und
das Spannelement (41) über eine Spindelaufnahme (411) an einer motorisch betriebenen Spindel (5) der Werkzeugmaschine (1) anbringbar ist, zur Bearbeitung des Werkstücks (31) durch ein Verfahren und Rotieren der Spindel (5),
**dadurch gekennzeichnet, dass**
auf einer Seite der Adaptergrundplatte (215) zumindest drei Werkstückanschlusselemente (213) zur Ausbildung der Werkstückaufnahme angeordnet sind, mittels welcher ein Werkstück (31) über das Werkstückverbindungselement (311) an dem Werkstückadapter (21) anbringbar ist, wobei die zumindest drei Werkstückanschlusselemente (213) von der Adaptergrundplatte (215) derart hervorstehen, dass das Werkstückverbindungselement (311) an zumindest drei Punkten an dem Werkstückadapter (21) gehalten wird, und in einer Ebene parallel zur Adaptergrundplatte (215) liegen, die senkrecht zu der Rotationsachse der Spindel (5) ist.

2. Werkstückadapter (21) nach Anspruch 1, wobei
die zumindest drei Werkstückanschlusselemente (213) auf der Adaptergrundplatte (215) senkrecht zu der Rotationsachse der Spindel (5) verschiebbar und arretierbar sind.

3. Werkstückadapter (21) nach Anspruch 1 oder 2, wobei
das Werkstückverbindungselement (311) Verbindungsöffnungen (313) aufweist, in welche vordere, von der Adaptergrundplatte (215) beabstandete Enden (211) der zumindest drei Werkstückanschlusselemente (213) eingefügt werden können, und das Werkstückverbindungselement (311) formschlüssig über zumindest ein Befestigungselement lösbar mittels der Enden (211) der zumindest drei Werkstückanschlusselemente (213) gehalten wird.

4. Werkstückadapter (21) nach einem der Ansprüche 1 bis 3, wobei
der Werkstückadapter (21) derart konfiguriert ist, dass er eine durch die Rotation der Spindel (5) erzeugte Unwucht des Werkstücks (31) bezogen auf die Rotationsachse der Spindel (5) ausgleicht, indem die zumindest drei Werkstückanschlusselemente (213) auf der Adaptergrundplatte (215) derart angeordnet und mit dem Werkstückverbindungselement (311) verbunden sind, dass eine Trägheitsachse des Werkstücks (31) komplementär zu einer Trägheitsachse des Werkstückadapters (21) bezogen auf die Rotation der Spindel (5) ist, so dass sich die Trägheitsachsen des Werkstückadapters (21) und des Werkstücks (31) im zusammengefügten Zustand zu einer resultierenden Trägheitsachse verschieben, die mit der Rotationsachse der Spindel (5) zusammenfällt.

5. Werkstückadapter (21) nach einem der Ansprüche 1 bis 4, wobei
die Werkstückaufnahme eine mechanische Verbindung zwischen dem Werkstückverbindungselement (311) und dem Werkstückadapter (21) herstellt, durch welche eine axiale und radiale Relativbewegung zwischen Werkstück (31) und Adapter (21) verhinderbar ist.

6. Werkstückadapter (21) nach einem der Ansprüche 1 bis 5, wobei
der Werkstückadapter (21) über den Spannanschluss (212) mit dem Spannelement (41) verbunden werden kann, indem ein Spannelementanschluss (412) des Spannelements (41) hydraulisch oder pneumatisch mit Druck beaufschlagt wird.

7. Werkstückspannsystem zur Verwendung in einer Werkzeugmaschine (1) mit einer motorisch betriebenen Spindel (5), aufweisend:
einen Werkstückadapter (21) nach einem der Ansprüche 1 bis 6, und
ein Spannelement (41), wobei
der Werkstückadapter (21) über einen Spannanschluss (212) an dem Spannelement (41) anbringbar ist,
das Spannelement (41) über eine Spindelaufnahme (411) an der motorisch betriebenen Spindel (5) der Werkzeugmaschine (1) zur Bearbeitung des Werkstücks (31) durch ein Verfahren und Rotieren der Spindel (5) anbringbar ist, und
die Verbindung zwischen Werkstückadapter (21) und Spannelement (41) und/oder die Verbindung zwischen Spannelement (41) und Spindel (5) durch eine hydraulische oder pneumatische Druckbeaufschlagung erfolgt.

8. Werkstückspannsystem nach Anspruch 7, wobei
die hydraulische oder pneumatische Druckbeaufschlagung des Spannelementanschlusses (412) des Spannelements (41) durch einen mechanischen Mechanismus, einen elektromagnetischen Mechanismus und/oder einen hydraulischen Mechanismus hergestellt werden kann.

9. Werkstückspannsystem nach Anspruch 7 oder 8, wobei
an dem Spannelement (41) über den Spannelementanschluss (412) anstelle von Werkstückadaptem (21) auch Werkzeuge zur Bearbeitung eines Werkstücks (31) aufnehmbar sind.

10. Werkstückspannsystem nach einem der Ansprüche 7 bis 9, wobei
der Spannelementanschluss (412) derart konfiguriert ist, dass er in einen geöffneten und einen geschlossenen Zustand bringbar ist, wobei
der Werkstückadapter (21) in dem geschlossenen Zustand des Spannelementanschlusses (412) rotatorisch und translatorisch fest mit dem Spannelement (41) verbunden ist, und
der Werkstückadapter (21) in dem geöffneten Zustand des Spannelementanschlusses (412) aus dem Spannelement (41) entnehmbar ist.

11. Werkstückspannsystem nach einem der Ansprüche 7 bis 10, wobei
der Spannelementanschluss (412) des Spannelements (41) zum Spannen des Werkstückadapters (21) durch eine an der Werkzeugmaschine (1) ausgebildete Vorrichtung (7) automatisiert betreibbar ist, indem die Spindel (5) und/oder die Vorrichtung (7) relativ zueinander verfahrbar ausgebildet sind, so dass ein Kontakt zwischen einem Kontaktelement (73) der Vorrichtung (7) und einem Verbindungsanschluss (74) des Spannelements (41) herstellbar ist.

## Claims

1. Workpiece adapter (21) for use in a machine tool (1), comprising:
an adapter base plate (215),
a clamping attachment (212), by means of which the workpiece adapter (21) can be connected to a clamping element (41) in a rotationally and translationally fixed manner,
a workpiece receptacle, and
a workpiece-connection element (313), which comprises retaining means for detachably receiving a workpiece (31) and connection means for connecting to the workpiece adapter (21),
the clamping attachment (212) being arranged on a side of the adapter base plate (215) opposite the workpiece receptacle, and
the clamping element (41) being able to be mounted on a motor-operated spindle (5) of the machine tool (1) via a spindle receptacle (411), for machining the workpiece (31) by moving and rotating the spindle (5),
**characterised in that**
at least three workpiece-attachment elements (213) are arranged on one side of the adapter base plate (215) in order to form the workpiece receptacle, by means of which a workpiece (31) can be mounted on the workpiece adapter (21) via the workpiece-connection element (311),
the at least three workpiece-attachment elements (213) projecting from the adapter base plate (215) such that the workpiece-connection element (311) is retained on the workpiece adapter (21) at at least three points and is in a plane parallel to the adapter base plate (215), which is perpendicular to the rotational axis of the spindle (5).

2. Workpiece adapter (21) according to claim 1, wherein
the at least three workpiece-attachment elements (213) can be shifted and locked on the adapter base plate (215) perpendicularly to the rotational axis of the spindle (5).

3. Workpiece adapter (21) according to claim 1 or 2, wherein
the workpiece-connection element (311) comprises connection openings (313) into which front ends (211) of the at least three workpiece-attachment elements (213) can be inserted, which ends are at a distance from the adapter base plate (215), and the workpiece-connection element (311) is detachably retained by means of the ends (211) of the at least three workpiece-attachment elements (213) in a form-fitting manner via at least one fastening element.

4. Workpiece adapter (21) according to any of claims 1 to 3, wherein
the workpiece adapter (21) is configured such that, based on the rotational axis of the spindle (5), it compensates for an imbalance of the workpiece (31) produced by the rotation of the spindle (5) by the at least three workpiece-attachment elements (213) being arranged on the adapter base plate (215) and connected to the workpiece-connection element (311) such that an axis of inertia of the workpiece (31) is complementary to an axis of inertia of the workpiece adapter (21) based on the rotation of the spindle (5) such that, when merged, the axes of inertia of the workpiece adapter (21) and of the workpiece (31) shift to form a resulting axis of inertia that coincides with the rotational axis of the spindle (5).

5. Workpiece adapter (21) according to any of claims 1 to 4, wherein
the workpiece receptacle establishes a mechanical connection between the workpiece-connection element (311) and the workpiece adapter (21) by means of which an axial and radial relative movement between the workpiece (31) and the adapter (21) can be prevented.

6. Workpiece adapter (21) according to any of claims 1 to 5, wherein
the workpiece adapter (21) can be connected to the clamping element (41) via the clamping attachment (212) by hydraulic or pneumatic pressure being applied to a clamping-element attachment (412) of the clamping element (41).

7. Workpiece-clamping system for use in a machine tool (1) comprising a motor-operated spindle (5), comprising:
a workpiece adapter (21) according to any of claims 1 to 6, and
a clamping element (41), wherein
the workpiece adapter (21) can be mounted on the clamping element (41) via a clamping attachment (212),
the clamping element (41) can be mounted on the motor-operated spindle (5) of the machine tool (1) via a spindle receptacle (411), for machining the workpiece (31) by moving and rotating the spindle (5), and
the connection between the workpiece adapter (21) and the clamping element (41) and/or the connection between the clamping element (41) and the spindle (5) is established by applying hydraulic or pneumatic pressure.

8. Workpiece-clamping system according to claim 7, wherein
the application of hydraulic or pneumatic pressure to the clamping-element attachment (412) of the clamping element (41) can be brought about by a mechanical mechanism, an electromagnetic mechanism and/or a hydraulic mechanism.

9. Workpiece-clamping system according to claim 7 or 8, wherein,
instead of workpiece adapters (21), tools for machining a workpiece (31) can also be received on the clamping element (41) via the clamping-element attachment (412).

10. Workpiece-clamping system according to any of claims 7 to 9, wherein
the clamping-element attachment (412) is configured such that it can be brought into an open and a closed position, wherein
the workpiece adapter (21) is connected to the clamping element (41) in a rotationally and translationally fixed manner in the closed position of the clamping-element attachment (412), and
the workpiece adapter (21) can be removed from the clamping element (41) in the open position of the clamping-element attachment (412).

11. Workpiece-clamping system according to any of claims 7 to 10, wherein,
for clamping the workpiece adapter (21), the clamping-element attachment (412) of the clamping element (41) can be operated in an automated manner by means of a device (7) formed on the machine tool (1) by the spindle (5) and/or the device (7) being designed to be movable relative to one another such that contact can be established between a contact element (73) of the device (7) and a connection attachment (74) of the clamping element (41).

## Revendications

1. Adaptateur de pièce (21) pour l'utilisation dans une machine-outil (1), présentant :
une plaque de base d'adaptateur (215),
un raccord de serrage (212), au moyen duquel l'adaptateur de pièce (21) peut être relié fixement à un élément de serrage (41) en rotation et translation,
un logement de pièce, et
un élément de liaison de pièce (313) qui présente des moyens de retenue pour la réception amovible d'une pièce (31) et des moyens de liaison pour la liaison avec l'adaptateur de pièce (21),
dans lequel
le raccord de serrage (212) est agencé sur un côté opposé au logement de pièce de la plaque de base d'adaptateur (215), et
l'élément de serrage (41) peut être monté par le biais d'un logement de broche (411) au niveau d'une broche (5) motorisée de la machine-outil (1), pour l'usinage de la pièce (31) par un déplacement et une rotation de la broche (5),
**caractérisé en ce que**
sur un côté de la plaque de base d'adaptateur (215) au moins trois éléments de raccord de pièce (213) sont agencés pour la réalisation du logement de pièce, au moyen duquel une pièce (31) peut être montée par le biais de l'élément de liaison de pièce (311) au niveau de l'adaptateur de pièce (21), dans lequel
les au moins trois éléments de raccord de pièce (213) dépassent de la plaque de base d'adaptateur (215) de telle manière que l'élément de liaison de pièce (311) soit maintenu au niveau au moins de trois points sur l'adaptateur de pièce (21), et se trouvent dans un plan parallèle à la plaque de base d'adaptateur (215) qui est perpendiculaire à l'axe de rotation de la broche (5).

2. Adaptateur de pièce (21) selon la revendication 1, dans lequel
les au moins trois éléments de raccord de pièce (213) peuvent être déplacés et arrêtés sur la plaque de base d'adaptateur (215) perpendiculairement à l'axe de rotation de la broche (5).

3. Adaptateur de pièce (21) selon la revendication 1 ou 2, dans lequel
l'élément de liaison de pièce (311) présente des ouvertures de liaison (313), dans lesquelles des extrémités (211) espacées de la plaque de base d'adaptateur (215) des au moins trois éléments de raccord de pièce (213) peuvent être insérées, et l'élément de liaison de pièce (311) est maintenu par complémentarité de formes par le biais de l'au moins un élément de fixation de manière détachable au moyen des extrémités (211) des au moins trois éléments de raccord de pièce (213).

4. Adaptateur de pièce (21) selon l'une quelconque des revendications 1 à 3, dans lequel
l'adaptateur de pièce (21) est configuré de telle manière qu'il compense un déséquilibre généré par la rotation de la broche (5) de la pièce (31) par rapport à l'axe de rotation de la broche (5) en ce que les au moins trois éléments de raccord de pièce (213) sont agencés sur la plaque de base d'adaptateur (215) et sont reliés à l'élément de liaison de pièce (311) de telle manière qu'un axe d'inertie de la pièce (31) soit complémentaire à un axe d'inertie de l'adaptateur de pièce (21) par rapport à la rotation de la broche (5) de sorte que les axes d'inertie de l'adaptateur de pièce (21) et de la pièce (31) se déplacent dans l'état joint vers un axe d'inertie résultant qui coïncide avec l'axe de rotation de la broche (5).

5. Adaptateur de pièce (21) selon l'une quelconque des revendications 1 à 4, dans lequel
le logement de pièce établit une liaison mécanique entre l'élément de liaison de pièce (311) et l'adaptateur de pièce (21), par laquelle un mouvement relatif axial et radial entre la pièce (31) et l'adaptateur (21) peut être empêché.

6. Adaptateur de pièce (21) selon l'une quelconque des revendications 1 à 5, dans lequel
l'adaptateur de pièce (21) peut être relié par le biais du raccord de serrage (212) à l'élément de serrage (41) en ce qu'un raccord d'élément de serrage (412) de l'élément de serrage (412) de l'élément de serrage (41) est alimenté en pression par voie hydraulique ou pneumatique.

7. Système de serrage de pièce pour l'utilisation dans une machine-outil (1) avec une broche (5) motorisée, présentant :
un adaptateur de pièce (21) selon l'une quelconque des revendications 1 à 6, et
un élément de serrage (41), dans lequel
l'adaptateur de pièce (21) peut être monté par le biais d'un raccord de serrage (212) au niveau de l'élément de serrage (41),
l'élément de serrage (41) peut être monté par le biais d'un logement de broche (411) au niveau de la broche (5) motorisée de la machine-outil (1) pour l'usinage de la pièce (31) par un déplacement et une rotation de la broche (5), et
la liaison entre l'adaptateur de pièce (21) et l'élément de serrage (41) et/ou la liaison entre l'élément de serrage (41) et la broche (5) est effectuée par une alimentation en pression hydraulique ou pneumatique.

8. Système de serrage de pièce selon la revendication 7, dans lequel
l'alimentation en pression hydraulique ou pneumatique du raccord de l'élément de serrage (412) de l'élément de serrage (41) peut être établie par un mécanisme mécanique, un mécanisme électromagnétique et/ou un mécanisme hydraulique.

9. Système de serrage de pièce selon la revendication 7 ou 8, dans lequel
des outils d'usinage d'une pièce (31) peuvent aussi être reçus au niveau de l'élément de serrage (41) par le biais du raccord d'élément de serrage (412) à la place d'adaptateurs de pièce (21).

10. Système de serrage de pièce selon l'une quelconque des revendications 7 à 9, dans lequel
le raccord d'élément de serrage (412) est configuré de telle manière qu'il puisse être amené dans un état ouvert et un état fermé, dans lequel
l'adaptateur de pièce (21) est relié à l'état fermé du raccord d'élément de serrage (412) fixement en rotation et translation à l'élément de serrage (41), et
l'adaptateur de pièce (21) peut être retiré dans l'état ouvert du raccord d'élément de serrage (412) hors de l'élément de serrage (41).

11. Système de serrage de pièce selon l'une quelconque des revendications 7 à 10, dans lequel
le raccord d'élément de serrage (412) de l'élément de serrage (41) peut être actionné de manière automatisée pour le serrage de l'adaptateur de pièce (21) par un dispositif (7) réalisé au niveau de la machine-outil (1), en ce que la broche (5) et/ou le dispositif (7) sont réalisés de manière déplaçable l'un par rapport à l'autre de sorte qu'un contact puisse être établi entre un élément de contact (73) du dispositif (7) et un raccord de liaison (74) de l'élément de serrage (41).
